# EUROPÄISCHE PATENTSCHRIFT

(11) **EP 0 393 470 B1**
(45) Veröffentlichungstag und Bekanntmachung des Hinweises auf die Patenterteilung: **22.02.1995**
(21) Anmeldenummer: 90106801.5
(22) Anmeldetag: 09.04.1990
(51) Int. Cl.: H04B 14/02, G08C 23/00

(54) **Übertragungsstrecke**
Transmission link
Voie de transmission

(30) Priorität: 20.04.1989 EP 89107170
(43) Veröffentlichungstag der Anmeldung: 24.10.1990
(73) Patentinhaber: SIEMENS AKTIENGESELLSCHAFT, 80333 München (DE)
(72) Erfinder: Zierhut, Hermann, Dipl.-Ing., D-8000 München 83 (DE)

(56) Entgegenhaltungen:
- DE-A- 2 719 937
- DE-A- 2 849 966
- DE-A- 3 337 205
- FUNKSCHAU, Band 59, Nr. 26, Teil 1, 18. Dezember 1987, Seiten 67-71, München, DE; E. BADENIUS et al.: "Ein infrarot-Fernbedienungstester"

## Beschreibung

Die Erfindung bezieht sich auf ein Verfahren zum Übertragen einer Folge von Signalen, jeweils aus Impuls und Pause bzw. aus Impulsen und Pausen, von einem Sender über ein Medium zu einer Empfangsschaltung eines Empfängers, wobei jeder Impuls mit zumindest zwei Frequenzen moduliert wird. Ein derartiges Verfahren ist bekannt (DE-A1-3 337 205).

Beim bekannten Verfahren wird mit einer Demodulationsschaltung für ein mit zwei Trägern moduliertes Fernbedienungssignal gearbeitet. Die Auswertung hängt hierbei vom Schicksal eines doppelmodulierten Signals ab.

Übertragungsstrecken aus Sender, Medium und Empfänger werden beispielsweise als Infrarotübertragungsstrecken ausgeführt. Jeder Impuls ist üblicherweise mit einer Frequenz moduliert. Wenn die Impulse mit einer Frequenz von beispielsweise 1 bis 10 kHz vorliegen, liegt bei einem bekannten System, Infra-fern genannt, die Modulationsfrequenz beispielsweise bei 40 kHz. Wenn in der Impulsfrequenz oder in der Modulationsfrequenz Störungen auftreten, kann die Übertragungsstrecke trotz der erhöhten Sicherheit durch die Modulationsfrequenz nicht immer von Störungen freigehalten werden.

Der Erfindung liegt die Aufgabe zugrunde, ein Verfahren und ein System zur Übertragung einer Folge von Signalen zu entwickeln, das bei hoher Störsicherheit mit geringem Energieverbrauch und Schaltungsaufwand auskommt.

Die Lösung der geschilderten Aufgabe besteht in einem Verfahren nach Patentanspruch 1 und in einem System nach Anspruch 5. Zur Modulation der Impulse werden zumindest zwei Frequenzen eingesetzt, wobei für jede Frequenz jedoch ein eigener Übertragungsweg gewählt wird. Die Signale gelangen also vom Sender zum Empfänger nebeneinander und nicht nacheinander. Der Empfänger weist für jede Modulationsfrequenz eine eigene Auswerteschaltung auf, wobei die Auswerteschaltungen an ihren Ausgängen der Funktion nach in einer UND-Schaltung verknüpft sind. Ein empfangenes Signal wird nur dann akzeptiert, wenn es über die Anzahl der Übertragungswege, die der Anzahl der Modulationsfrequenzen entspricht, ungestört empfangen wird. Fehlinformationen sind dadurch umso ausgeschlossener, je höher die Anzahl der Übertragungswege ist.

Ein Konzept der UND-Verknüpfung mehrerer Auswerteschaltungen für verschiedene Frequenzen ist an sich bekannt (DE-A1-2 849 966). Hierbei sind UND-Gatter so hintereinander geschaltet, daß an einem Eingang eines UND-Gatters jeweils der Ausgang der vorhergehenden Vergleichsstufe und am anderen Eingang des UND-Gatters das Eingangssignal einer Dekodierschaltung anliegt. Eine derartige Verknüpfung arbeitet zeitlich nacheinander und nicht unabhängig nebeneinander, wie es erfindungsgemäß der Fall ist.

Das die Nachricht bzw. Information enthaltende Signal kann dabei in üblicher Weise als Basisband bzw. als codiertes Signal vorliegen. Derartige codierte Signale sind als Biphase, PPM, PAM und andere gebräuchlich.

Die Übertragungsstrecke kann in an sich bekannter Weise so aufgebaut sein, daß eine die Impulse modulierende erste Modulationsfrequenz mit einer höherfrequenten zweiten Modulationsfrequenz moduliert ist. Dieses Prinzip kann entsprechend mit einer dritten oder mit einer weiteren Modulationsfrequenz weitergeführt werden. Bei zwei Modulationsfrequenzen kann die erste Modulationsfrequenz vorzugsweise im Bereich von 30 bis 50 kHz liegen und die zweite Modulationsfrequenz im Bereich von 400 bis 500 kHz. Dadurch wird der für Zwischenfrequenzen im AM-Rundfunk freigehaltene Frequenzbereich um 455 kHz technisch günstig genutzt, um elektrische Abschirmungsmaßnahmen, beispielsweise an einem Infrarot-Eingangsverstärker, einzusparen.

Die Übertragungsstrecke kann auch in an sich bekannter Weise so aufgebaut sein, daß eine die Impulse modulierende erste Modulationsfrequenz abwechselnd mit einer zweiten Modulationsfrequenz und zumindest mit einer dritten Modulationsfrequenz moduliert ist. Dadurch kann man mit einer weiteren Modulationsfrequenz, die zur vorausgehenden nur einen verhältnismäßig geringen Frequenzabstand aufweist, die Störsicherheit weiter erhöhen.

Insbesondere kann die Übertragungsstrecke mit Infrarot-Signalen arbeiten.

Ein System zur Übertragung einer Folge von Signalen aus Impuls und Pause bzw. aus Impulsen und Pausen kann in einfacher Weise dadurch gebildet werden, daß ein Sender und ein Empfänger nach einem der geschilderten Verfahren arbeitet.

Die Erfindung soll nun anhand von in der Zeichnung grob schematisch wiedergegebenen Ausführungsbeispielen näher erläutert werden:

In FIG 1 ist eine Übertragungsstrecke veranschaulicht.

In FIG 2 ist eine Folge von Impulsen und Pausen dargestellt, die als Signal oder als Folge von Signalen verstanden werden können.

In FIG 3 sind Impulse, die mit einer ersten Modulationsfrequenz moduliert sind, wiedergegeben.

In FIG 4 ist eine Folge von Impulsen veranschaulicht, deren die Impulse modulierende erste Modulationsfrequenz mit einer höherfrequenten zweiten Modulationsfrequenz moduliert ist. Es ist der Anschaulichkeit wegen eine gespreizte Darstellung gewählt worden.

In FIG 5 ist eine Folge von Impulsen wiedergegeben, deren die Impulse modulierende erste Modulationsfrequenz abwechselnd mit einer zweiten Modulationsfrequenz und mit einer dritten Modulationsfrequenz moduliert ist. Es ist die gespreizte Darstellung nach FIG 4 verwendet.

In FIG 6 ist ein Empfänger mit zwei Auswerteschaltungen für zwei unterschiedliche Modulationsfrequenzen in einer UND-Schaltung veranschaulicht.

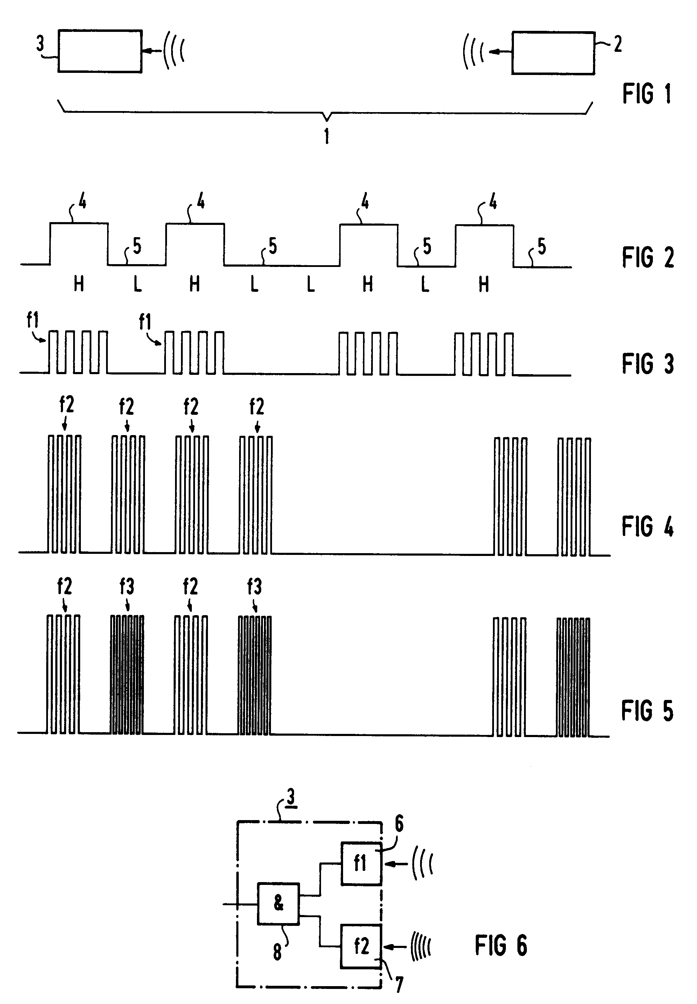

Die Übertragungsstrecke 1 nach FIG 1 weist einen Sender 2 und einen Empfänger 3 auf. Es wird eine Folge von Signalen, jeweils aus Impulsen 4 und Pausen 5 eines Mediums, beispielsweise Infrarotlicht, zur Empfangsschaltung des Empfängers 3 übertragen. Es ist bekannt, jeden Impuls nach FIG 2 mit einer Frequenz, z.B. f1, nach FIG 3 zu modulieren. Erfindungsgemäß werden zur Modulation der Impulse mehrere Frequenzen eingesetzt, im Ausführungsbeispiel nach FIG 3 und nach FIG 4 die Frequenzen f1 und f2. Die erste Modulationsfrequenz f1 kann vorzugsweise im Bereich von 30 bis 50 kHz und die zweite Modulationsfrequenz im Bereich von 400 bis 500 kHz liegen. Die Folge von Impulsen und Pausen nach FIG 2 können in der angegebenen Weise als High- und Low-Einzelsignale verstanden werden, die beispielsweise 1 oder Null auf eine der bekannten Weisen bilden. Bei einer Übertragungsstrecke nach der Erfindung kann mit drei Modulationsfrequenzen die die Impulse modulierende erste Frequenz abwechselnd mit einer zweiten Modulationsfrequenz und mit einer dritten Modulationsfrequenz nach FIG 5 moduliert werden.

Zur Codierung der Nachricht stehen darüber hinaus die bekannten Möglichkeiten zur Verfügung.

Zum Ausführungsbeispiel einer Infrarot-Übertragungsstrecke mit zwei Modulationsfrequenzen ist in FIG 6 ein Empfänger 3 mit zwei Auswerteschaltungen 6 und 7 veranschaulicht, jeweils für die Modulationsfrequenz f1 bzw. f2, deren Ausgänge in einer UND-Schaltung über das UND-Gatter 8 verknüpft sind.

Die Infrarot-Signale können die Frequenzen im Bereich um 455 kHz nutzen.

## Patentansprüche

1. Verfahren zum Übertragen einer Folge von Signalen, jeweils aus Impuls(4) und Pause (5) bzw. aus Impulsen und Pausen, von einem Sender (2) über ein Medium zu einer Empfangsschaltung eines Empfängers (3), wobei jeder Impuls mit zumindest zwei Frequenzen (f1, f2,...) moduliert wird, **dadurch gekennzeichnet**,
daß je Frequenz ein eigener Übertragungsweg gewählt wird und daß im Empfänger (3) für jede Modulationsfrequenz (f1;f2;...) eine eigene Auswerteschaltung (6;7) vorgesehen ist, wobei die Ergebnisse der Auswerteschaltungen in einer der Funktion nach UND-Schaltung (8) verarbeitet werden.

2. Verfahren nach Anspruch 1, **dadurch gekennzeichnet**, daß eine die Impulse modulierende erste Modulationsfrequenz (f1) mit einer höher frequenten zweiten Modulationsfrequenz (f2) moduliert wird.

3. Verfahren nach Anspruch 2, **dadurch gekennzeichnet**, daß mit einer ersten Modulationsfrequenz im Bereich von 30 bis 50 kHz und mit einer zweiten Modulationsfrequenz im Bereich von 400 bis 500 kHz gearbeitet wird.

4. Verfahren nach Anspruch 1, **dadurch gekennzeichnet**, daß eine die Impulse modulierende erste Modulationsfrequenz (f1) abwechselnd mit einer zweiten Modulationsfrequenz (f2) und zumindest mit einer dritten Modulationsfrequenz (f3) moduliert wird.

5. System zur Übertragung einer Folge von Signalen aus Impuls (4) und Pause (5), bzw. aus Impulsen und Pausen, zwischen einem Sender (2) und einem Empfänger (3), die eine Übertragungsstrecke (1) bilden, wobei jeder Impuls mit zumindest zwei Frequenzen (F1, F2,...) gemäß einem Verfahren nach Anspruch 1 moduliert ist, wobei für jede Frequenz aus einem Frequenzmodulator ein eigener Übertragungsweg zur Verfügung steht und im Empfänger (3) für jede Modulationsfrequenz (F1; F2;...) eine eigene Auswerteschaltung (6, 7) vorgesehen ist, die in einer UND-Schaltung miteinander verbunden sind.

## Claims

1. Method of transmitting a sequence of signals in each case consisting of a pulse (4) and an interval (5) or pulses and intervals from a transmitter (2) via a medium to a receiver circuit of a receiver (3), each pulse being modulated with at least two frequencies (f1, f2, ...), characterized in that an individual transmission path is selected for each frequency; and in that an individual evaluation circuit (6; 7) is provided in the receiver (3) for each modulating frequency (f1; f2, ...), the results of the evaluation circuits being processed in an AND circuit (8) according to the function.

2. Method according to Claim 1, characterized in that a first modulating frequency (f1) modulating the pulses is modulated with a higher frequency second modulating frequency (f2).

3. Method according to Claim 2, characterized in that a first modulating frequency in the range of between 30 and 50 kHz and a second modulating frequency in the range of between 400 and 500 kHz are used.

4. Method according to Claim 1, characterized in that a first modulating frequency (f1) modulating the pulses is modulated alternately with a second modulating frequency (f2) and at least with a third modulating frequency (f3).

5. System for transmitting a sequence of signals consisting of a pulse (4) and an interval (5) or of pulses and intervals between a transmitter (2) and a receiver (3) which form a transmission link (1), each pulse being modulated with at least two frequencies (F1, F2, ...) according to a method in accordance with Claim 1, an individual transmission path being available for each frequency from a frequency modulator and an individual evaluation circuit (6, 7) being provided in the receiver (3) for each modulating frequency (F1; F2;...), the evaluation circuits being connected to one another in an AND circuit.

## Revendications

1. Procédé de transmission d'un train de signaux constitués chacun d'une impulsion (4) et d'une pause (5) ou d'impulsions et de pauses, d'un émetteur (2) par l'intermédiaire d'un milieu à un circuit de réception d'un récepteur (3), chaque impulsion étant modulée par au moins deux fréquences (f1, f2, ...), caractérisé en ce que
on choisit une voie de transmission propre à chaque fréquence et on prévoit dans le récepteur (3) un circuit (6; 7) d'évaluation propre à chaque fréquence (f1; f2; ...) de modulation et l'on traite les résultats des circuits d'évaluation dans un circuit (8) suivant la fonction (ET).

2. Procédé suivant la revendication 1, caractérisé en ce que l'on module une première fréquence (f1) de modulation modulant les impulsions par une seconde fréquence (f2) de modulation de fréquence plus grande.

3. Procédé suivant la revendication 2, caractérisé en ce que l'on opère avec une première fréquence de modulation comprise entre 30 et 50 kHz et avec une seconde fréquence de modulation comprise entre 400 et 500 kHz.

4. Procédé suivant la revendication 1, caractérisé en ce que l'on module une première fréquence (f1) de modulation modulant les impulsions, en alternance par une seconde fréquence (f2) de modulation et par au moins une troisième fréquence (f3) de modulation.

5. Système de transmission d'un train de signaux constitués d'une impulsion (4) et d'une pause (5) ou d'impulsions et de pauses, entre un émetteur (2) et un récepteur (3), qui forment une voie (1) de transmission, chaque impulsion étant modulée par au moins deux fréquences (F1, F2, ...) selon un procédé suivant la revendication, une voie de transmission propre à chaque fréquence étant à la disposition de chaque fréquence provenant d'un modulateur de fréquence et un circuit (6, 7) d'évaluation propre à chaque fréquence (F1; F2;...) de modulation étant prévu dans le récepteur (3), lesquels circuits sont reliés l'un à l'autre dans un circuit (ET).
